# EUROPÄISCHE PATENTSCHRIFT

(11) **EP 0 823 543 B1**
(45) Veröffentlichungstag und Bekanntmachung des Hinweises auf die Patenterteilung: **25.04.2001**
(21) Anmeldenummer: 97111762.7
(22) Anmeldetag: 10.07.1997
(51) Int. Cl.: F01L 1/02, F02B 67/06, F16H 7/18

(54) **Kettentrieb-Einheit für eine Brennkraftmaschine**
Chain drive unit for an internal combustion engine
Unité d'entraînement à chaîne pour un moteur à combustion interne

(30) Priorität: 07.08.1996 DE 19631875
(43) Veröffentlichungstag der Anmeldung: 11.02.1998
(73) Patentinhaber: Bayerische Motoren Werke Aktiengesellschaft, 80788 München (DE)
(72) Erfinder: Streck, Günter, 80995 München (DE); Haberl, Alois, 82287 Jesenwang (DE)

(56) Entgegenhaltungen:
- EP-A- 0 297 263
- DE-A- 3 810 188
- GB-A- 770 826
- US-A- 1 493 818

## Beschreibung

Die Erfindung betrifft eine Kettentrieb-Einheit für eine Brennkraftmaschine, insbesondere für deren Nockenwellen-Antrieb oder für den Antrieb eines Hilfsaggregates, mit einer Kette und zwei miteinander in Verbindung stehenden Schienen für deren Zugtrum und Leertrum, sowie mit einem Antriebsritzel, welches mit der Brennkraftmaschinen-Kurbelwelle verbindbar ist. Zum bekannten Stand der Technik wird beispielshalber auf die EP 0 297 263 B1 oder die EP 0 291 110 B1 verwiesen, ferner auf die nicht vorveröffentlichte deutsche Patentanmeldung 196 07 819.

Eine insbesondere im Hinblick auf eine vereinfachte Montage vorteilhafte Lagerung für eine Kettentrieb-Einheit nach dem Oberbegriff des Anspruchs 1 aufzuzeigen, ist Aufgabe der vorliegenden Erfindung.
Zur Lösung dieser Aufgabe ist vorgesehen, daß zumindest eine der Schienen auf der Kurbelwelle gelagert oder geführt ist, wobei diese Lagerung oder Führung lediglich in Radialrichtung R der Kurbelwelle wirksam ist, während die Positionierung in Kurbelwellen-Achsrichtung über die in zumindest einer der Schienen geführte Kette erfolgt. Vorteilhafte Aus- und Weiterbildungen sind Inhalt der Unteransprüche.

Erfindungsgemäß wird die Kettentrieb-Einheit einerseits durch die Kurbelwelle der Brennkraftmaschine selbst geführt, und zwar bevorzugt in Radialrichtung R der Kurbelwelle, wodurch eine zusätzliche starre Befestigung am Gehäuse der Brennkraftmaschine überflüssig wird, während in Kurbelwellen-Achsrichtung eine schwimmende Lagerung der Kettentrieb-Einheit vorliegt, welche grundsätzlich aus der DE 34 17 099 C2 bekannt ist. Diese schwimmende Lagerung ist im Hinblick auf die Führung der Kette besonders vorteilhaft, da hierdurch in der zur Kettentrieb-Ebene senkrechten Richtung keine nennenswerte Krafteinwirkung auf die Kette erfolgt. Es soll noch darauf hingewiesen werden, daß neben der Lagerung oder Führung zumindest eine der Schienen der Kettentrieb-Einheit auch eine weitere Abstützmöglichkeit für diese Schiene am Brennkraftmaschinen-Gehäuse vorgesehen sein kann, wobei lediglich dafür Sorge getragen werden muß, daß keine Überbestimmung der Schienen-Führung erfolgt, d. h. die weitere Abstützung am Brennkraftmaschinen-Gehäuse muß somit gewisse Freiheitsgrade, nämlich insbesondere in Kurbelwellen-Achsrichtung, aufweisen.

So kann - insbesondere wenn die Kettentrieb-Einheit für den Nockenwellen-Antrieb der Brennkraftmaschine vorgesehen und hierzu in einem Kettenschacht einsetzbar ist - eine der Schienen in eine Nase des Brennkraftmaschinen-Gehäuses einhängbar oder sonstwie - beispielsweise über geignete Langlöcher - geführt sein. Diese Schiene fungiert dann als Führungsschiene und kann demgemäß die Zugtrumkraft aufnehmen. Hierzu kann die Führungsschiene ggf. unter Zwischenlage von Profilgummistücken an weiteren Abstützflächen des Brennkraftmaschinen-Gehäuses anliegen. Auch hierdurch bleibt eine schwimmende Lagerung der Kettentrieb-Einheit in Kurbelwellen-Achsrichtung erhalten.

Die andere, dem Leertrum der Kette zugeordnete Schiene kann dann die Funktion einer Spannschiene übernehmen, wozu an dieser Schiene auf geeignete Weise ein irgendwie gearteter Kettenspanner angreifen kann. Dabei soll diese Spannschiene mit der Führungsschiene in Verbindung stehen, um die gesamte Kettentrieb-Einheit als Vormontage-Einheit ausbilden zu können. Eine bevorzugte, da funktional vorteilhafte Verbindung dieser beiden Schienen liegt vor, wenn die im Hinblick auf die Führung der Kette ohnehin bereits einen U-förmigen Querschnitt aufweisende Führungsschiene mit ihren Schenkeln zusätzlich die Führung der Spannschiene übernimmt. Dies kann in einem sog. gemeinsamen Abschnitt erfolgen, wobei weiterhin eine Bewegbarkeit der Spannschiene gegenüber der Führungsschiene sichergestellt sein soll. Beispielsweise kann die Spannschiene gegenüber der Führungsschiene verschwenkbar sein, und zwar bevorzugt um die Kurbelwellen-Achse, wenn sowohl die Führungsschiene als auch die Spannschiene im genannten gemeinsamen Abschnitt auf der Kurbelwelle gelagert bzw. geführt sind. Dabei kann die Spannschiene, die ebenfalls einen U-förmigen Querschnitt aufweisen kann, mit ihren Schenkeln entweder zwischen den Schenkeln der Führungsschiene angeordnet sein oder die Schenkel der Führungsschiene umgreifen. Dieser gemeinsame Abschnitt stellt dann ein Drehgelenk dar, wobei die Kurbelwellen-Achse die Drehachse ist und die Kurbelwelle gleichzeitig das Lager für dieses Drehgelenk bzw. für diese beiden Schienen bildet. Anstelle der Kurbelwelle kann hierbei auch ein sog. Wellenfortsatz treten, d. h. ein an die Stirnseite der Kurbelwelle angeflanschtes eigenständiges Wellenstück. Dieser sog. Wellenfortsatz ermöglicht eine besonders einfache Montage einer erfindungsgemäßen Kettentrieb-Einheit.

Eine alternative Verbindung zwischen Spannschiene und Führungsschiene zur Bildung einer Vormontage-Einheit ergibt sich, wenn die Spannschiene auf einem plattenförmigen Fortsatz der Führungsschiene abseits der Kurbelwelle verschwenkbar gelagert ist. Auch hier kann die Spannschiene beispielsweise mittels eines Bolzens gesichert wieder von den Schenkeln der Führungsschiene, die entsprechend verlängert sind und zwei sog. plattenförmige Fortsätze bilden, umgriffen und geführt sein.

In einer anderen Ausführungsform können die beiden Schienen aber auch zu einem einzigen Bauteil zusammengefaßt sein und dann insbesondere für den Antrieb eines Hilfsaggregates vorgesehen sein. Auch hier bilden diese Schienen zusammen mit der Kette sowie dem Antriebsritzel eine Vormontage-Einheit, welche zusätzlich das Abtriebsrad umfassen kann. Zur vereinfachten Fertigung kann dabei dieses aus den beiden Schienen bestehende Bauteil, jedoch grundsätzlich auch nur eine der beiden Schienen, wenn es sich um eine Ausbildung in Form von Führungsschiene und Spannschiene handelt, in Kurbelwellen-Achsrichtung geteilt ausgebildet sein.

Im folgenden wird die Erfindung anhand mehrerer bevorzugter Ausführungsbeispiele näher erläutert. Dabei zeigt
- Fig. 1: die teilweise aufgebrochene Ansicht einer ersten Ausführungsform,
- Fig. 1a: den Schnitt A-A aus Fig. 1,
- Fig. 1b: den Schnitt B-B aus Fig. 1,
- Fig. 1c: den Schnitt C-C aus Fig. 1,und
- Fig. 1d: eine Teilansicht gemäß Fig. 1 im nicht aufgebrochenen Zustand.
- Fig. 2: zeigt teilweise die Rückseite einer weiteren Ausführungsform, von der in
- Fig. 2b: die Vorderansicht teilweise aufgebrochen dargestellt ist, und von der

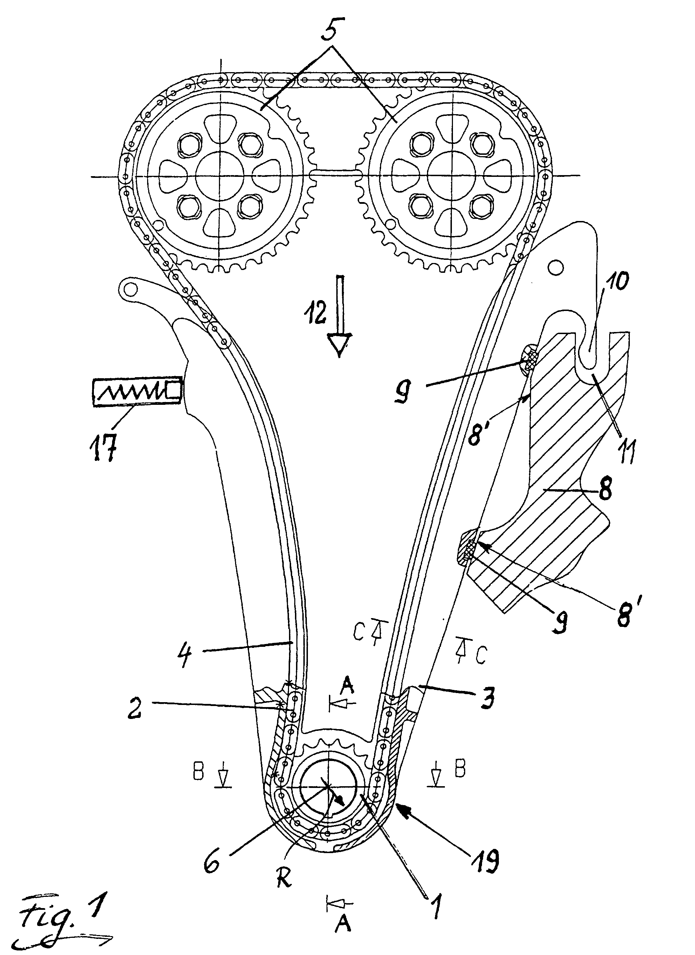

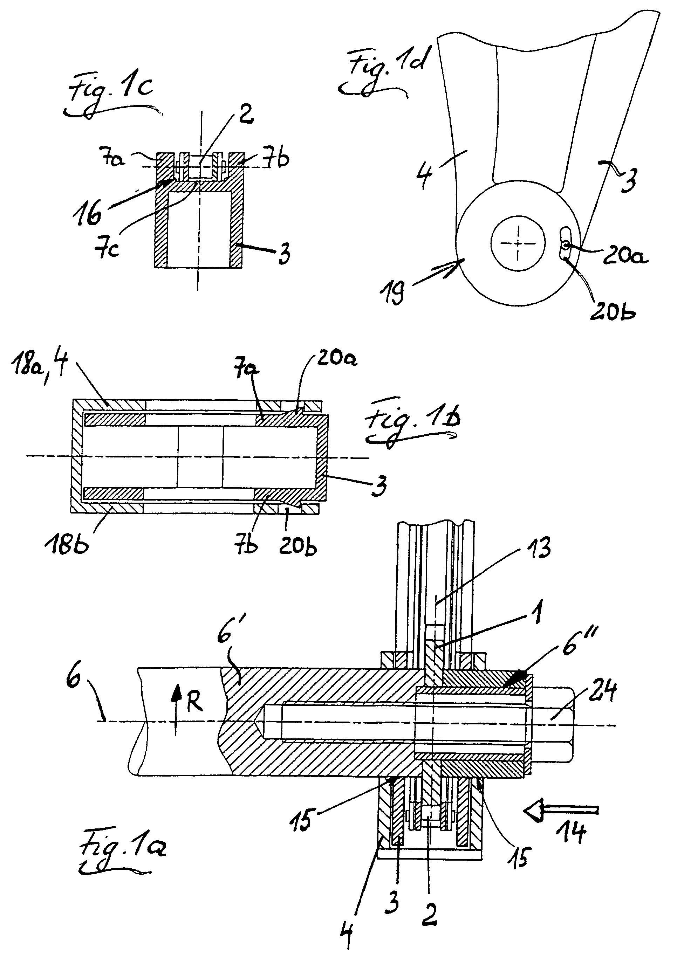

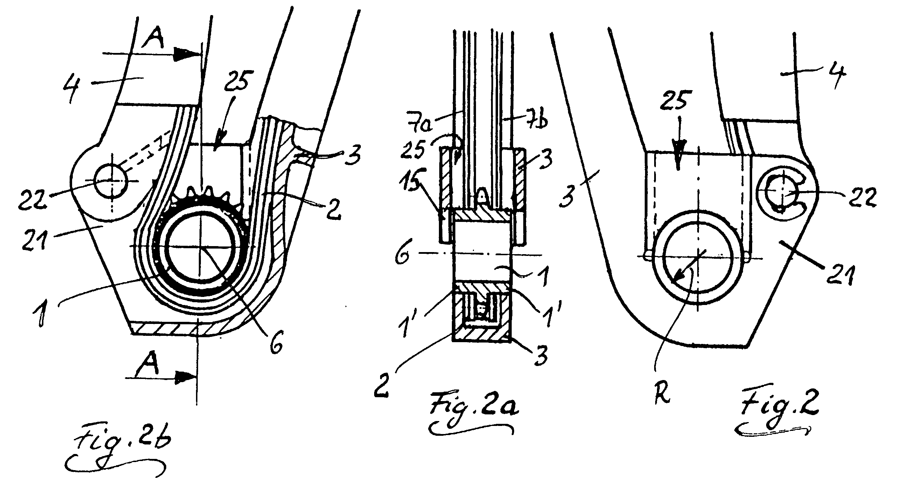

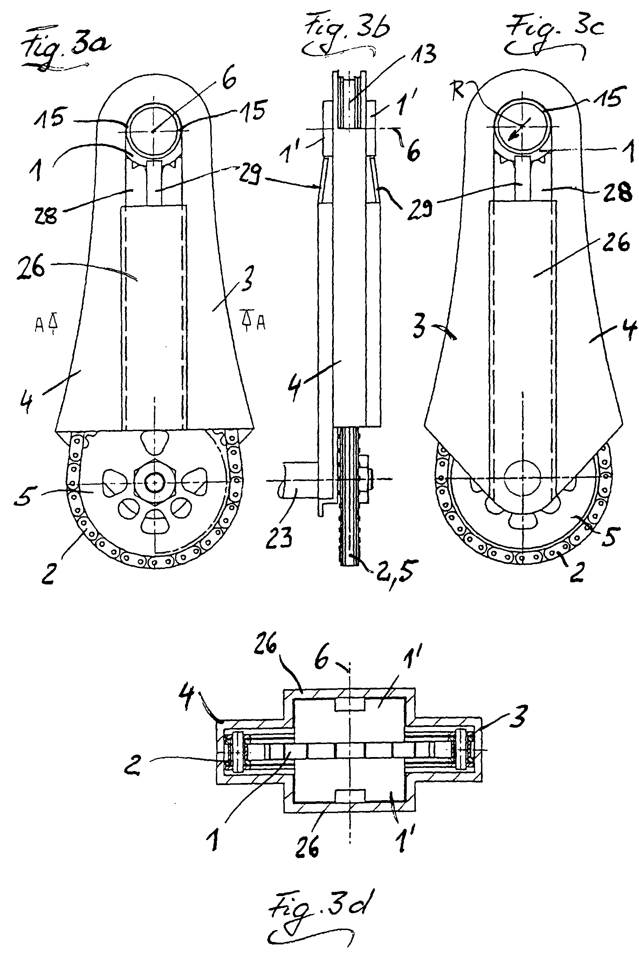

- Fig. 2a: den Schnitt A-A aus Fig. 2b zeigt.

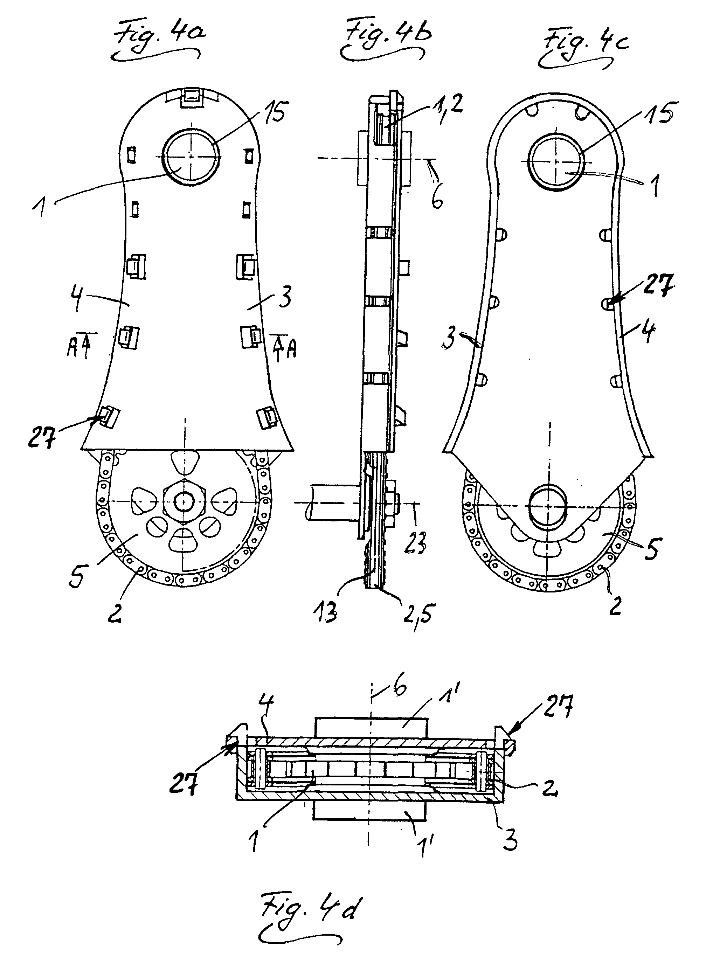

Eine dritte Ausführungsform der Erfindung ist in der Figurenfolge 3a bis 3d offenbart, wobei
- Fig. 3a: die Ansicht von vorne,
- Fig. 3b: eine Seitenansicht,
- Fig. 3c: die Ansicht von hinten, und
- Fig. 3d: den Schnitt A-A aus Fig. 3a zeigt.

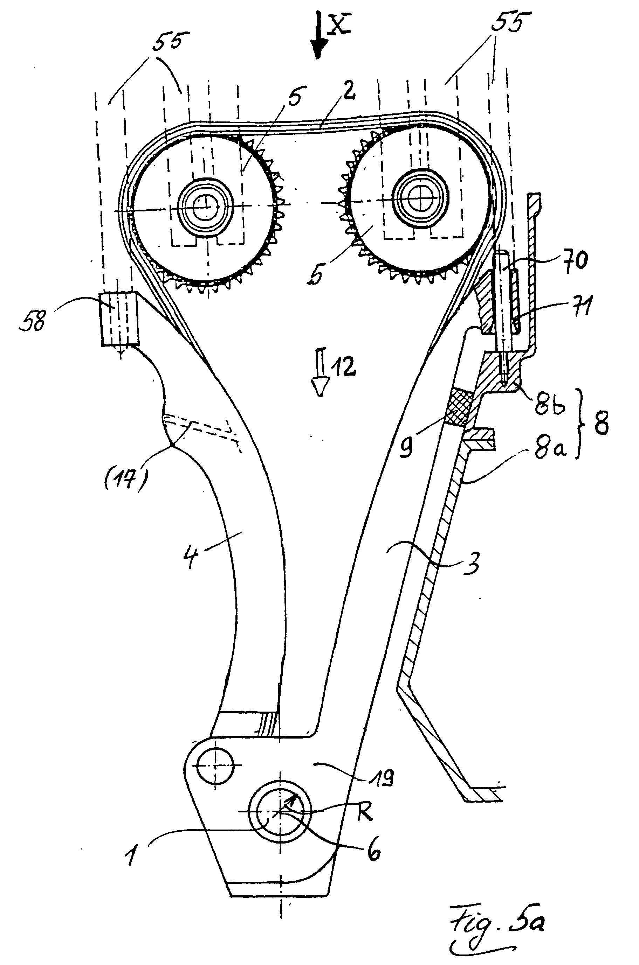

Noch eine weitere Ausführungsform der Erfindung ist analog der Figurenfolge 3a bis 3d in den Figuren 4a bis 4d gezeigt.

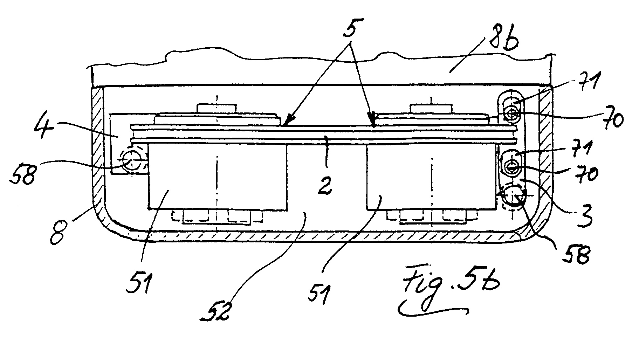

Schließlich zeigt Fig 5a ein Abwandlung der Darstellung im wesentlichen nach Fig. 1a mit einer geänderten Anbindung der Führungsschiene, sowie Fig. 5b die Ansicht X aus Fig. 5a.

Dabei sind in allen Figurendarstellungen gleiche Bauteile mit gleichen Bezugsziffern bezeichnet.

Jede der dargestellten Kettentrieb-Einheiten besitzt neben einem Antriebsritzel 1 eine Kette 2, sowie zwei Schienen 3, 4 für das Zugtrum und für das Leertrum der Kette 2, die weiterhin über zumindest ein Abtriebsrad 5 geführt ist. Diese beschriebenen Kettentrieb-Einheiten sind für eine Brennkraftmaschine vorgesehen, wobei das Antriebsritzel 1 stets mit der Brennkraftmaschinen-Kurbelwelle 6', von welcher - mit Ausnahme von Fig. 1a - lediglich die Achse 6 dargestellt ist, verbunden ist. Über das Antriebsritzel 1, dessen Achse mit der Kurbelwellenachse 6 zusammenfällt, wird somit die Rotationsbewegung der Brennkraftmaschinen-Kurbelwelle 6' auf die Kette 2 und von dieser auf das zumindest eine Abtriebsrad 5 übertragen.

Die beiden Ausführungsbeispiele nach den Fig. 1, 2 und 5 dienen zum Antrieb zweier Brennkraftmaschinen-Nockenwellen, an welchen jeweils ein Abtriebsrad 5 angeflanscht ist. Diese nunmehr beschriebene Kettentrieb-Einheit ist als Vormontage-Einheit ausgebildet und kann in einen lediglich in Fig. 5b dargestellten und mit der Bezugsziffer 52 bezeichneten Kettenschacht der Brennkraftmaschine im wesentlichen von oben her eingesetzt werden, wie dies bereits in der nicht vorveröffentlichten deutschen Patentanmeldung 196 07 819 beschrieben ist.

Die Schiene 3 der Kettentrieb-Einheit fungiert als sog. Führungsschiene und wird im folgenden auch als Führungsschiene 3 bezeichnet, während die andere Schiene 4 eine an sich geläufige Spannschiene bildet.

Einen Schnitt durch die Führungsschiene 3 zeigt die Fig. 1c. Man erkennt die die Kette 2 aufnehmende U-Form, die durch die beiden Schenkel 7a, 7b der Führungsschiene 3 definiert wird, sowie die mit der Bezugsziffer 7c versehene Basisfläche, auf welcher die Kette 2 abwälzt. Die Führungsschiene 3 dient somit zur Abstützung des Zugtrums der Kette 2 und stützt sich selbst an Abstützflächen 8' des ansonsten nicht näher dargestellten Brennkraftmaschinen-Gehäuses 8 (bestehend aus Kurbelgehäuse 8a und Zylinderkopf 8b) unter Zwischenlage von Profilgummielementen 9 ab (vgl.Fig.1, 5a).
Zusätzlich ist die Führungsschiene 3 in ihrem oberen Endbereich mit einem sog. Federabschnitt 10 versehen, der in eine Aufnahme 11 des Brennkraftmaschinen-Gehäuses 8 eingehängt ist, um ein Wegkippen der Führungsschiene 3 von den Abstützflächen 8' zu verhindern. Tatsächlich ist die Führungsschiene 3 nämlich nicht weiter am Gehäuse 8 der Brennkraftmaschine befestigt und insbesondere nicht fest mit dem Gehäuse 8 verschraubt oder dgl., sondern - wie im folgenden erläutert wird - auf der Brennkraftmaschinen-Kurbelwelle 6' gelagert bzw. geführt, und zwar lediglich in Radialrichtung R dieser Kurbelwelle 6'.

Selbstverständlich sind anstelle der Einhängverbindung mit dem als Nase ausgebildeten Federabschnitt 10 in die Aufnahme 11 auch andere geeignete Abstützverbindungen möglich, so z.B. eine Führung über Langlöcher oder dgl.. Eine derartige Gestaltung ist in Fig. 5a gezeigt:
Demnach sind im Brennkraftmaschinen-Gehäuse 8, d.h. entweder im Kurbelgehäuse 8a oder wie hier gezeigt im Zylinderkopf 8b, zwei hintereinander und jeweils im wesentlichen parallel zur Kettentrieb-Ebene (diese ist auch durch ihre Symmetrieebene 13 repräsentiert) angeordnete Stehbolzen 70 verschraubt. Diese Stehbolzen 70 durchdringen die Führungsschiene 3 in geeigneten Langlöchern 71 (hinsichtlich Kurbelwellen-Achsrichtung 6) und sichern diese somit gegen Verschwenken, lassen jedoch - aufgrund der Langloch-Gestaltung - eine axiale Verschiebung der Führungsschiene 3 d.h. eine Verschiebung derselben in Achsrichtung 6 zu. Dabei sind zwei Stehbolzen 70 vorgesehen, um auch ein Verdrehen der Führungsschiene 3 um eine senkrecht zur Ansicht gemäß Fig. 5b verlaufende Achse zu verhindern.

Fig. 5a zeigt weiterhin unter der Bezugsziffer 55 sog. Montagefinger eines Handhabungsautomaten oder dgl., mit Hilfe derer/dessen die Montage der Kettentrieb-Einheit, welche wie erläutert aus den beiden Schienen 3, 4, dem Antriebsritzel 1, der Kette 2 und dem zumindest einen (hier: zwei) Abtriebsrad 5 (hier: Abtriebsrädern 5) besteht, erfolgen kann, d.h. gemäß Pfeilrichtung 12 in den in Fig. 5b mit der Bezugsziffer 52 bezeichneten Kettenschacht "von oben her" eingeführt werden kann. Hierzu greifen zwei Montagefinger 55 an den beiden Abtriebsrädern 5 an, desweiteren greifen zwei weitere Montagefinger 55 in an den oberen Enden der Schienen 3, 4 vorgesehene Eingriffsöffnungen 58 ein. Nach erfolgter Montage der Kettentrieb-Einheit an der Brennkraftmaschine werden diese Montagefinger 55 gegen Pfeilrichtung 12 abgezogen.
Im übrigen erkennt man in Fig. 5b unter der Bezugsziffer 51 eine jeweils mit dem Abtriebsrad 5 verbundene, nicht näher erläuterte Nockenwellen-Verdreheinheit, die die Verbindung zwischen dem jeweiligen Abtriebsrad 5 und der zugeordneten nicht gezeigten Brennkraftmaschinen-Nockenwelle herstellt, und die es gleichzeitig ermöglicht, jede Nockenwelle gegenüber ihrem Abtriebsrad 5 zu verdrehen, um unterschiedliche Phasenlagen und somit unterschiedliche Steuerzeiten der Brennkraftmaschinen-Ventilsteuerung einstellen zu können.

Zurückkommend auf die Lagerung der Kettentrieb-Einheit ist insbesondere Fig. 1a zu entnehmen, wie diese Lagerung der Führungsschiene 3 auf der Kurbelwelle 6' bzw. auf einem Wellenfortsatz 6" derselben erfolgt. Wie bereits erläutert, soll die gezeigte Kettentrieb-Einheit von oben her gemäß Pfeilrichtung 12 in den in Fig. 5b dargestellten und mit der Bezugsziffer 52 bezeichneten Kettenschacht der Brennkraftmaschine einführbar sein, wobei diese Kettentrieb-Einheit bereits das Antriebsritzel 1 umfaßt. Dies ist nur möglich, wenn die Kurbelwelle 6' bzw. der noch zu erläuternde Wellenfortsatz 6" derselben den Kettenschacht 52 nicht vollständig durchdringt. Dies wird anhand der Fig. 1a abstrakt erläutert. Demnach erstrecke sich die Kurbelwelle 6' von links kommend nur bis knapp vor die Symmetrieebene 13 der Kettentrieb-Einheit, so daß - eine ausreichende Breite bzw. Tiefe des Kettenschachtes 52 in Richtung der Achse 6 vorausgesetzt - die Kettentrieb-Einheit an diesem Ende der Kurbelwelle 6' vorbeigeführt und anschließend gemäß Pfeilrichtung 14 an der Stirnseite der Kurbelwelle 6' angelegt werden kann, wie dies dargestellt ist. Hierbei werden die Führungsschiene 3 und die Spannschiene 4, welche eine dementsprechende kreisförmige Aussparung 15 zum Aufstecken derselben auf die Kurbelwelle 6' aufweisen, jeweils mit ihrem linksseitigen Abschnitt durch die Kurbelwelle 6' geführt. Anschließend daran kann von rechts her ein Wellenfortsatz 6" an die Kurbelwelle 6' angeflanscht werden, wobei der Wellenfortsatz 6" hier zweiteilig gestuft ausgebildet ist, mit seiner äußeren Stufe den gleichen Durchmesser besitzt wie die Kurbelwelle 6', und mit seiner inneren Stufe nicht nur teilweise in die Kurbelwelle 6' hineinragt, sondern auch das Antriebsritzel 1 aufnimmt. Letzteres ist somit auf dem Wellenfortsatz 6" gelagert, wobei dieser wiederrum in der Kurbelwelle 6' geführt und mit einer Paßschraube 24 an der Kurbelwelle 6' befestigt ist. Zugleich kommt die Kettentrieb-Einheit mit ihrer Führungsschiene 3 (sowie beim Ausführungsbeispiel nach der Figur 1 zusätzlich mit der Spannschiene 4 ) mit ihrer rechten Hälfte auf dem Wellenfortsatz 6" zum Liegen, so daß auch die rechte Hälfte der Kettentrieb-Einheit mit einer ebensolchen Aussparung 15 auf diesem Wellenfortsatz 6" und somit praktisch auch auf der Kurbelwelle 6' gelagert bzw geführt ist.

Diese eben beschriebene Lagerung der gesamten Führungsschiene 3 auf der Kurbelwelle 6' (bzw. auf der Kurbelwelle 6' und dem Wellenfortsatz 6") wirkt dabei lediglich in Radialrichtung R der Kurbelwelle, während in Kurbelwellen-Achsrichtung, d. h. in Richtung der Achse 6 die Führungsschiene 3 bezüglich der Kurbelwelle 6' bzw. bezüglich des Wellenfortsatzes 6" verschiebbar ist. Die entsprechende Positionierung der Führungsschiene 3 in Kurbelwellenachsrichtung 6 wird nämlich - wie bereits kurz erläutert - von der Kette 2 übernommen, die - wie wiederum Fig. 1c zeigt - mit ihren seitlichen Laschen zwischen zwei von der sog. Basisfläche 7c der Führungsschiene 3 abkragenden Stegflächen 16 geführt ist. Dabei ist diese Führung der Führungsschiene 3 in Achsrichtung 6 durch die Kette 2 aber auch über die nicht bezeichneten Bolzen bzw. Niete, die die einzelnen Kettenglieder miteinander verbinden, möglich, wobei diese Bolzen bzw. Niete dann an den Schenkeln 7a,7b der Führungsschiene 3 anlaufen.
Zusammenfassend wirkt somit die Lagerung bzw. Führung der Führungsschiene 3 auf der Kurbelwelle 6' wie ersichtlich lediglich in Radialrichtung R der Kurbelwelle, wobei ohne Zusatzmaßnahmen aufgrund des Kreisquerschnittes der Kurbelwelle 6' sowie der in diesem Bereich entsprechenden Kreisform der Aussparung 15 die Führungsschiene 3 um die Achse 6 verschwenkbar wäre. Um eine derartige Verschwenkbewegung zu verhindern, sind die bereits erläuterten Abstützflächen 8 sowie entweder der in die Aufnahme 11 eingreifende Federabschnitt 10, oder die mit den Langlöchern 71 zusammenwirkenden Stehbolzen 70 vorgesehen.

Wie bereits erwähnt, fungiert die andere Schiene 4 der Kettentrieb-Einheit als Spannschiene 4. Demzufolge muß die Spannschiene 4 gegenüber der Führungsschiene 3 bewegbar sein, um die von einem Kettenspanner 17 auf die Spannschiene 4 übertragene Kraft auf die Kette 2 einwirken lassen zu können. Dieser Kettenspanner 17 ist dabei in üblicher Weise am Brennkraftmaschinen-Gehäuse 8 befestigt (nicht gezeigt).

Beim Ausführungsbeispiel nach Fig. 1 ist neben der Führungsschiene 3 auch die Spannschiene 4 auf der Kurbelwelle 6' bzw. auf dem Wellenfortsatz 6" gelagert, und zwar in der gleichen Weise wie die Führungsschiene 3. Die zur Kette 2 hin im Querschnitt ebenfalls U-förmige Spannschiene 4 besitzt somit ebenfalls zwei Schenkel 18a, 18b, die gemäß Fig. 1b derart an den Schenkeln 7a, 7b der Führungsschiene 3 anliegen bzw. diese umgreifen, daß die Spannschiene 4 in Richtung der Achse 6 von der Führungsschiene 3 geführt ist. In Radialrichtung R der Kurbelwelle 6' hingegen ist die Spannschiene 4 direkt auf dieser Kurbelwelle 6' bzw. auf dem Wellenfortsatz 6" gelagert, so daß ein sog. gemeinsamer Abschnitt 19 von Führungsschiene 3 und Spannschiene 4 vorliegt, in welchem diese beiden Schienen 3, 4 auf der Kurbelwelle 6' gelagert sind. Hierbei wird durch entsprechendes Zusammenstecken der beiden U-förmigen Profile der Schienen 3, 4 in diesem gemeinsamen Abschnitt 19 ein geschlossener Querschnitt erzeugt, wie Fig. 1b zeigt.

Zur Montageerleichterung sind beim Ausführungsbeispiel nach Fig 1 in diesem gemeinsamen Abschnitt 19 die beiden Schienen 3, 4 formschlüssig miteinander verbunden, wobei jedoch diese formschlüssige Verbindung 20 derart ausgebildet ist, daß die Spannschiene 4 weiterhin in ausreichendem Maße gegenüber der Führungsschiene 3 verschwenkt werden kann, um die Kettenspannfunktion wahrzunehmen. Dabei ist diese formschlüssige Verbindung als Clipsverbindung ausgebildet, wobei gemäß den Fig. 1b, 1d Rasthaken 20a, die an den Außenseiten der Führungsschiene 3 vorgesehen sind, in entsprechende Aussparungen 20b in den Schenkeln 18a, 18b der Spannschiene 4 eingreifen. Wie Fig. 1d zeigt, sind die Aussparungen 20b als Langloch ausgebildet, um die Spannschiene 4 zur Realisierung der Spannfunktion gegenüber den Rasthaken 20a bzw. gegenüber der Führungsschiene 3 verschwenken zu können.

Beim Ausführungsbeispiel nach Fig. 2 ist die Spannschiene 4 auf einem plattenförmigen Fortsatz 21 der Führungsschiene 3 abseits der Kurbelwelle 6' verschwenkbar gelagert. Dieser plattenförmige Fortsatz 21 stellt jeweils eine Verlängerung der beiden Schenkel 7a, 7b der Führungsschiene 3 dar, so daß die Spannschiene 4 mittels eines Bolzens 22 zwischen zwei (nämlich einem vorderen und einem hinteren) plattenförmigen Fortsätzen 21 der Führungsschiene 3 verschwenkbar gehalten ist. Letztere ist - wie bereits erläutert - wieder auf der Kurbelwelle 6' bzw. auf dem Wellenfortsatz 6" gelagert, und stützt sich zusätzlich über die Abstütz-flächen 8' sowie über die Aufnahme 11 oder wie Fig. 5a zeigt über die Stehbolzen 70 am Brennkraftmaschinen-Gehäuse 8 ab, wobei die Positionierung in Kurbelwellen-Achsrichtung 6 wieder über die in der Führungsschiene 3 geführte Kette 2 erfolgt.

Um bei dieser Ausführungsform nach den Fig 2 bis 2b das Antriebsritzel 1 auf einfache Weise in die entsprechende Aufnahme der Führungsschiene 3 einsetzen zu können - ( schließlich soll diese Kettentrieb-Einheit eine Vormontage-Einheit bilden ) - weist die Führungsschiene 3 einen geeigneten Einführschacht 25 auf, über welchen das hier beidseitig mit einem Bund 1' versehene Antriebsritzel 1 zwischen die beiden Schenkel 7a, 7b der Führungsschiene 3 eingeführt werden kann. Die untere Halbschale der Führungsschiene 3 positioniert bzw zentriert im Bereich der Aussparung 15 somit vorrangig das Antriebsritzel 1 bzw. wird von diesem geführt oder positioniert, während die obere Halbschale der Führungsschiene 3 im Bereich der Aussparung 15 , welche aufgrund des Einführschachtes 25 lediglich bei der gemäß Fig. 2b hinteren Hälfte der Führungsschiene 3 vorhanden ist, vorrangig der Führung der Führungsschiene 3 auf der Kurbelwelle 6' in radialer Richtung dient.

Ein weiteres Ausführungsbeispiel einer Kettentrieb-Einheit, die auf der Brennkraftmaschinen-Kurbelwelle 6' oder auf einem Wellenfortsatz 6" derselben gelagert ist, wobei die Positionierung in Achsrichtung 6 über die in zumindest einer der Schienen 3, 4 geführte Kette 2 erfolgt, ist in den Fig. 3a bis 3d dargestellt. Die hierin gezeigte Kettentrieb-Einheit dient für den Antrieb eines nicht gezeigten Hilfsaggregates, beispielsweise einer Ölpumpe, und umfaßt zusätzlich ein Abtriebsrad 5, das auf einer Welle 23 dieses Hilfsaggregates befestigt werden kann. Bei dieser Kettentrieb-Einheit nach Fig. 3 sind die beiden Schienen 3, 4 zu einem Bauteil zusammengefaßt, nachdem hier kein Kettenspanner erforderlich ist. Wie Fig. 3d zeigt, sind diese Schienen 3, 4 wieder derart gestaltet, daß die darin geführte Kette 2 die aus diesen beiden Schienen 3, 4 bestehende Baueinheit in Kurbelwellen-Achsrichtung 6 positionieren kann. In Radialrichtung R der Kurbelwelle 6 hingegen ist die Schienen-Baueinheit 3, 4 durch die Kurbelwelle 6' bzw. einem Wellenfortsatz 6" derselben geführt, nachdem diese Baueinheit mit ihrer kreisförmigen Aussparung 15 auf der Kurbelwelle 6' bzw. dem Wellenfortsatz 6" gelagert ist. Letzteres ist wiederrum lediglich repräsentativ durch die Kurbelwellen-Achse 6 dargestellt, ist jedoch de facto analog Fig .1a gestaltet.

Ähnlich dem Ausführungsbeispiel nach den Fig. 2 bis 2b weist hier ( Fig. 3a bis Fig.3d ) das Antriebsritzel 1 beiseitig einen Bund 1' auf, so daß auch hier ein Einführschacht für dieses Antriebsritzel 1 vorgesehen sein muß. Hierzu sind die Verbindungswände 26 zwischen den beiden eigentlichen Schienen 3, 4 -letztere bilden zusammen mit der hinteren sowie der vorderen Verbindungswand 26 wie bereits erwähnt ein einziges Bauteil - entsprechend geformt. Im Bereich der ebenfalls erforderlichen Aussparung 15, über welche die beiden Bunde 1' aus diesem einzigen Bauteil herausragen, weisen hierzu die beiden Verbindungswände 26 geeignete Durchbrüche 28 auf. In diesen Durchbrüchen 28 befinden sich vorne und hinten an den Verbindungswänden 26 angeformte Zungen 29, welche das Antriebsritzel 1 über seine Bunde 1' in Montageposition halten. Hierzu sind die Zungen 29 federnd ausgebildet, so daß das Antriebsritzel 1 zusammmen mit der Kette 2 von unten her, d.h. vom Abtriebsrad 5 her, in das Schienen-Bauteil eingeschoben werden kann. Hierbei federn die Zungen 29 zunächst nach außen und gelangen anschließend in die dargestellte Position.

Schließlich zeigen die Fig. 4a bis 4d eine weitere Ausführungsform der Erfindung, wonach zumindest eine der Schienen, bevorzugt jedoch die Schienen-Baueinheit nach Fig. 3 und somit beide Schienen 3, 4 in einer Ebene parallel zur Symmetrieebene 13 des Kettentriebes geteilt ausgebildet ist. Hierzu bilden der Schenkel 7a sowie die Basisfläche 7c ( vgl. Fig. 1c) eine erste L-förmige Bauteilhälfte, die mit dem zweiten Schenkel 7b, der quasi ein Dekkelteil bildet, zum geschlossenen U-Profil-Bauteil zusammengesetzt wird. Dies vereinfacht die Montage der Kettentrieb-Einheit, und es können Antriebsritzel 1 mit beliebig breiter Nabe, d.h. breiten Bunden 1' zum Einsatz kommen. Hierdruch kann auch die Breite der jeweiligen Lager bezüglich der Räder-Wellen vergrößert werden, ohne die Außenbreite des gesamten Bauteiles zu vergrößern. Die beiden Teilstücke der Baueinheit können dabei durch Clipsverbindungen 27 miteinander verbunden sein. Da vor dem Miteinander-Verbinden der beiden Bauteilhälften bereits das Antriebsritzel 1 mit der Kette 2 eingelegt werden kann, ist hier kein besonderer Einführschacht erforderlich, vielmehr genügt die Aussparung 15, über welche das Antriebsritzel 1 mit seinen Bunden 1' aus der Baueinheit hinausragt.
Neben den beschriebenen Ausführungsformen sind selbstverständlich eine Vielzahl weiterer Abwandlungen insbesondere konstruktiver Art von den gezeigten Ausführungsbeispielen möglich, ohne den Inhalt der Patentansprüche zu verlassen.

### Bezugszeichenliste:

- 1: Antriebsritzel
- 1': seitlicher Bund von 1

- 2: Kette
- 3: Schiene (Führungsschiene)
- 4: Schiene (Spannschiene)
- 5: Abtriebsrad

- 6: Kurbelwellen-Achse bzw. Achsrichtung
- 6': Kurbelwelle
- 6": Wellenfortsatz von 6'

- 7a: Schenkel (der Führungsschiene 3)
- 7b: Schenkel (der Führungsschiene 3)
- 7c: Basisfläche (der Führungsschiene 3)

- 8: Brennkraftmaschinen-Gehäuse
- 8': Abstützfläche
- 8a: Kurbelgehäuse
- 8b: Zylinderkopf

- 9: Profilgummielement
- 10: Federabschnitt, als Nase ausgebildet
- 11: Aufnahme (für 10 in 8)

- 12: Pfeilrichtung (Montagerichtung)
- 13: Symmetrieebene der Kettentrieb-Einheit
- 14: Pfeilrichtung

- 15: Aussparung
- 16: Stegfläche(n) (an 3)
- 17: Kettenspanner

- 18a: Schenkel der Spannschiene 4
- 18b: Schenkel der Spannschiene 4
- 19: gemeinsamer Abschnitt von 3 und 4

- 20: formschlüssige Verbindung von 3 mit 4
- 20a: Rasthaken
- 20b: Aussparungen

- 21: plattenförmiger Fortsatz
- 22: Bolzen
- 23: Welle eines Hilfsaggregates

- 24: Paßschraube
- 25: Einführschacht
- 26: Verbindungswände zwischen 3 und 4

- 27: Clipsverbindung
- 28: Durchbruch in 26
- 29: Zunge

- 51: Nockenwellen-Verdreheinheit
- 52: Kettenschacht
- 55: Montagefinger eines Handhabungsautomaten

- 58: Eingriffsöffnung
- 70: Stehbolzen
- 71: Langloch

## Patentansprüche

1. Kettentrieb-Einheit für eine Brennkraftmaschine, insbesondere für deren Nokkenwellen-Antrieb oder für den Antrieb eines Hilfsaggregates, mit einer Kette (2) und zwei miteinander in Verbindung stehenden Schienen (3,4) für deren Zugtrum und Leertrum, sowie mit einem Antriebsritzel (1), welches mit der Brennkraftmaschinen-Kurbelwelle (6') verbunden ist,
dadurch gekennzeichnet, dass
zumindest eine der Schienen (3) auf der Kurbelwelle (6', Wellenfortsatz 6") gelagert ist, wobei diese Lagerung lediglich in Radialrichtung (R) der Kurbelwelle (6') wirksam ist, wozu die eine Schiene zumindest die Kette (2) U-förmig umschließt, während die Positionierung in Kurbelwellen-Achsrichtung (6) über die in zumindest einer der Schienen (3) geführte Kette (2) erfolgt.

2. Kettentrieb-Einheit nach Anspruch 1,
für den Nockenwellen-Antrieb, mit zumindest einem Abtriebsrad (5), dadurch gekennzeichnet, daß die als Vormontage-Einheit ausgebildete Kettentrieb-Einheit in einen Kettenschacht (52) der Brennkraftmaschine einsetzbar ist.

3. Kettentrieb-Einheit nach Anspruch 2,
dadurch gekennzeichnet, daß eine der Schienen als Führungsschiene (3) ausgebildet und zusätzlich in Kurbelwellen-Achsrichtung (6) verschiebbar am Brennkraftmaschinen-Gehäuse (8) geführt ist, während die andere Schiene als gegenüber der Führungsschiene (3) bewegbare Spannschiene (4) fungiert.

4. Kettentrieb-Einheit nach Anspruch 3,
dadurch gekennzeichnet, daß die im Querschnitt zur Kette (2) hin im wesentlichen U-förmige Führungsschiene (3) in einem gemeinsamen Abschnitt (19) mit ihren Schenkeln (7a, 7b) die Spannschiene (4) bewegbar führt.

5. Kettentrieb-Einheit nach Anspruch 4,
dadurch gekennzeichnet, daß die Führungsschiene (3) und die Spannschiene (4) im gemeinsamen Abschnitt (19) auf der Kurbelwelle (6') oder auf einem Wellenfortsatz (6") derselben gelagert sind.

6. Kettentrieb-Einheit nach Anspruch 3 oder 4,
dadurch gekennzeichnet, daß die Spannschiene (4) auf einem plattenförmigen Fortsatz (21) der Führungsschiene (3) abseits der Kurbelwelle (6') verschwenkbar gelagert ist, während die Führungsschiene (3) auf der Kurbelwelle (6') oder auf einem Wellenfortsatz (6") derselben gelagert ist.

7. Kettentrieb-Einheit nach Anspruch 1,
dadurch gekennzeichnet, daß die beiden Schienen (3, 4) zu einem Bauteil zusammengefaßt sind und die zusammen mit einem Abtriebsrad (5) eine Vormontage-Einheit bildende Kettentrieb-Einheit für den Antrieb eines Hilfsaggregates vorgesehen ist.

8. Kettentrieb-Einheit nach einem der vorangegangenen Ansprüche,
dadurch gekennzeichnet, daß zumindest eine der Schienen (3, 4) in einer Ebene parallel zur Symmetrie-Ebene (13) des Kettentriebes geteilt ausgebildet ist.

## Claims

1. A chain drive unit for an internal combustion engine, especially for the camshaft drive thereof or for driving an auxiliary unit, comprising a chain (2) and two interconnected rails (3, 4) for the pulling strand and the idle strand of the chain, and also comprising a drive pinion (1) connected to the engine crankshaft (6'),
characterised in that
at least one of the rails (3) is mounted on the crankshaft (6', shaft extension 6"), the said mounting being operative only in the radial direction (R) of the crankshaft (6'), to which end one rail at least surrounds the chain (2) in a U shape whereas positioning in the axial direction (6) of the crankshaft is effected via the chain (2) guided in at least one of the rails (3).

2. A chain drive unit according to claim 1,
for the camshaft drive, comprising at least one driven wheel (5),
characterised in that the chain drive unit, in the form of a pre-assembled unit, is insertable into a chain pit (52) in the engine.

3. A chain drive unit according to claim 2,
characterised in that one rail is constructed as a guide rail (3) and is additionally guided in the axial direction (6) of the crankshaft so as to be movable on the engine casing (8), whereas the other rail operates as a tightening rail (4) movable relative to the guide rail (3).

4. A chain drive unit according to claim 3,
characterised in that the arms (7a, 7b) of the guide chain (3), which is substantially U-shaped in cross-section towards the chain (2), guide the tightening chain (4) so as to be movable in a common portion (19).

5. A chain drive unit according to claim 4, characterised in that the guide chain (3) and the tightening chain (4) are mounted in the common portion (19) on the crankshaft (6') or on a shaft extension (6").

6. A chain drive unit according to claim 3 or claim 4,
characterised in that the tightening rail (4) is mounted so as to be pivotable on a plate-like extension (21) of the guide rail (3) downstream of the crankshaft (6'), whereas the guide rail (3) is mounted on the crankshaft (6') or on an extension (6") thereof.

7. A chain drive unit according to claim 1,
characterised in that the two rails (3, 4) are combined in a single unit and the chain drive unit, which together with the driven wheel (5) forms a pre-assembled unit, is provided for driving an auxiliary assembly.

8. A chain drive unit according to any of the preceding claims,
characterised in that at least one of the rails is divided in a plane parallel to the symmetry plane (13) of the chain drive.

## Revendications

1. Unité d'entraînement à chaîne pour un moteur à combustion interne, en particulier pour l'entraînement de son arbre à cames ou pour l'entraînement d'un sous-ensemble auxiliaire, avec une chaîne (2) et deux rails (3, 4) se tenant en liaison l'un avec l'autre, pour son brin de traction et son brin de retour, ainsi qu'avec un pignon d'entraînement (1), qui est relié à l'arbre du vilebrequin (6') du moteur à combustion interne,
caractérisée en ce qu'
au moins l'un des rails (3) est monté sur l'arbre du vilebrequin (6', prolongement de l'arbre 6"), ce montage étant opérationnel uniquement dans le sens radial (R) de l'arbre du vilebrequin (6'), et pour cela l'un des rails au moins entoure en forme d'U la chaîne (2), tandis que le positionnement dans le sens de l'axe (6) de l'arbre du vilebrequin a lieu au moyen de la chaîne (2) qui passe dans au moins l'un des rails (3).

2. Unité d'entraînement à chaîne selon la revendication 1, pour l'entraînement d'un arbre à cames, avec au moins une roue menée (5),
caractérisée en ce que
l'unité d'entraînement à chaîne constituée sous la forme d'une unité préassemblée peut être insérée dans un puits de chaîne (52) du moteur à combustion interne.

3. Unité d'entraînement à chaîne selon la revendication 2,
caractérisée en ce que
l'un des rails est constitué sous la forme d'un rail de guidage (3) et peut coulisser en plus dans le sens de l'axe (6) de l'arbre de vilebrequin sur le carter (8) du moteur à combustion interne, tandis que l'autre rail fonctionne comme un rail de tension (4) pouvant se mouvoir par rapport au rail de guidage (3).

4. Unité d'entraînement à chaîne selon la revendication 3,
caractérisée en ce que
le rail de guidage (3) qui a en section transversale en direction de la chaîne(2) sensiblement la forme d'un U, fait passer de façon mobile dans une section commune (19) avec ses branches (7a, 7b) le rail de tension (4).

5. Unité d'entraînement à chaîne selon la revendication 3,
caractérisée en ce que
le rail de guidage (3) et le rail de tension (4) sont montés dans la section commune (19) sur l'arbre du vilebrequin (6') ou sur un prolongement de cet arbre (6").

6. Unité d'entraînement à chaîne selon la revendication 3 ou la revendication 4,
caractérisée en ce que
le rail de tension (4) est monté de façon à pouvoir pivoter sur un prolongement (21) en forme de plaque du rail de guidage (3) à l'envers de l'arbre du vilebrequin (6'), tandis que le rail de guidage (3) est monté sur l'arbre du vilebrequin (6') ou sur un prolongement (6") de cet arbre.

7. Unité d'entraînement à chaîne selon la revendication 1,
caractérisée en ce que
les deux rails (3, 4) sont réunis en une pièce constitutive, et l'unité d'entraînement à chaîne formant avec une roue menée (5) une unité de préassemblage est prévue pour l'entraînement d'un sous-ensemble accessoire.

8. Unité d'entraînement à chaîne selon l'une des revendications précédentes,
caractérisée en ce que
au moins l'un des rails (3,4) est constitué en étant divisé dans un plan parallèle au plan de symétrie (13) de l'entraînement à chaîne.
